**Europäisches Patentamt**

**European Patent Office**

**Office européen des brevets**

(19)

(11) Veröffentlichungsnummer : **0 012 918**
**B1**

(12) **EUROPÄISCHE PATENTSCHRIFT**

(45) Veröffentlichungstag der Patentschrift :
**07.12.83**

(21) Anmeldenummer : **79105074.3**

(22) Anmeldetag : **10.12.79**

(51) Int. Cl.³ : **G 01 S 13/76**

(54) **PIN-Dioden-Hochfrequenzschalter für Sekundärradar-Abfragegeräte und -Transponder.**

(30) Priorität : **20.12.78 DE 2855173**

(43) Veröffentlichungstag der Anmeldung :
**09.07.80 Patentblatt 80/14**

(45) Bekanntmachung des Hinweises auf die Patenterteilung : **07.12.83 Patentblatt 83/49**

(84) Benannte Vertragsstaaten :
**BE FR GB IT NL**

(56) Entgegenhaltungen :
**FR-A- 1 279 138**
**GB-A- 1 515 666**
**US-A- 3 922 685**

(73) Patentinhaber : **SIEMENS AKTIENGESELLSCHAFT**
**Berlin und München Wittelsbacherplatz 2**
**D-8000 München 2 (DE)**

(72) Erfinder : **Beyer, Franz**
**Zündterstrasse 11**
**D-8000 München 21 (DE)**
Erfinder : **Sedlmair, Siegfried, Dipl.-Ing.**
**Mittenwalderstrasse 147**
**D-8031 Gröbenzell (DE)**

PIN-Dioden-Hochfrequenzschalter für Sekundärradar-Abfragegeräte und -Transponder

Die Erfindung bezieht sich auf einen in einem mit einer Einrichtung zur Nebenzipfelsignalunterdrückung auf dem Abfrage- und Antwortweg (ISLS und RSLS) versehenen Sekundärradar-Abfragegerät vorgesehenen PIN-Dioden-Hochfrequenzschalter zur Aufteilung der von einem Sender kommenden Abfrageimpulse an eine erste Antenne und der vom gleichen Sender ausgehenden Bezugspegelimpulse an eine zweite Antenne.

Die Erfindung bezieht sich auch auf einen in einem mit einer mit zwei Antennen ausgestatteten Antennendiversity-Einrichtung versehenen Sekundärradar-Transponder vorgesehenen PIN-Dioden-Hochfrequenzschalter zur Beaufschlagung einer der beiden Antennen mit Antwortimpulsen.

In beiden Fällen geht die Erfindung davon aus, daß die Aufteilung der Impulse bzw. die Beaufschlagung der Antennen mittels zweier von einer Ansteuerschaltung entweder im Sperr- oder Kurzschlußbereich betriebener PIN-Dioden erfolgt, deren einer Anschluß jeweils über ein aus drei Viertelwellenlängenleitungsstücken bestehendes T-Glied zum einen mit dem Senderanschluß und zum anderen mit dem Anschluß für die eine Antenne bzw. mit dem Anschluß für die andere Antenne verbunden ist, sowie das der PIN-Dioden-Hochfrequenzschalter zur Weiterleitung der an den beiden Antennenanschlüssen vorliegenden Empfangssignale an zwei Empfänger dient, von denen jeder jeweils einer der Antennen zugeordnet ist und an seiner Eingangsseite ein die Sendesignale sperrendes, aber die Empfangssignale durchlassendes Bandfilter aufweist.

Die Nebenzipfelsignalunterdrückung auf dem Abfrageweg beruht darauf, daß neben der eigentlichen, über eine Richtantenne abgestrahlten Abfrage ein weiteres Signal über eine Antenne mit unterschiedlichem Diagramm an einen Transponder einen Bezugspegel liefert. Im Transponder wird dann durch einen Pegelvergleich ermittelt, ob das Signal von einer Haupt- oder Nebenkeule stammt. Abfragen über Nebenkeulen werden vom Transponder nicht beantwortet. Bei der Nebenzipfelsignalunterdrückung auf dem Antwortweg werden von der Abfragestation alle Antworten über zwei getrennte Kanäle empfangen, nämlich zum einen über die Richtantenne mit einem nachfolgenden Empfänger und zum anderen über die Rundstrahlantenne ebenfalls mit einem nachfolgenden Empfänger. Die beiden Empfängerausgänge werden durch einen Amplitudenvergleich derart logisch miteinander verknüpft, das nur von der Hauptkeule erfaßte Signale zur Anzeige gebracht werden. Bei dem der Erfindung zugrunde liegenden Sekundärradar-Abfragegerät werden beide Nebenzipfelsignalunterdrückungs-Verfahren gleichzeitig verwendet.

Auf der Hochfrequenzseite eines solchen, mit Nebenzipfelsignalunterdrückung arbeitenden Sekundärradar-Abfragegeräts sind somit mehrere Aufgaben zu erfüllen. Zum einen muß die richtige Anschaltung des Senders an eine der beiden Antennen erfolgen. Das Sendesignal muß zeitlich aufgeteilt werden. Die eigentlichen Abfrageimpulse gelangen zur Richtantenne, während der Bezugspegelimpuls über eine Rundstrahlantenne abgestrahlt wird. Zum anderen muß jeweils ein Empfänger an die ihm zugeordnete Antenne angeschaltet werden. Schließlich muß noch eine Empfängertrennung vom Sendesignal im Sendebetrieb vorgenommen werden.

Es ist bekannt, diese Aufgaben zum einen durch die Verwendung eines PIN-Diodenschalters und zum anderen mittels einer Sende-Empfangs-Weiche zu lösen. Da beim Sekundärradar-Verfahren die Sende- und die Empfangsfrequenz unterschiedlich sind, benützt man zur Entkopplung von Sende- und Empfangsweg eine Filterweiche. Der eigentliche Hochfrequenzschalter benutzt als Schaltelement PIN-Dioden. Diese sind spezielle Halbleiterdioden, welche bei den Trägerfrequenzen 1 030 MHz (= Abfragefrequenz, Sendefrequenz) und 1 090 MHz (= Antwortfrequenz, Empfangsfrequenz) im wesentlichen ihre Gleichrichtereigenschaft verloren haben. Sie wirken in diesem Frequenzbereich nur noch als geschaltete Widerstände und besitzen dann je nach Schaltzustand entweder einen hohen oder einen niedrigen Widerstandswert. Aus dem Buch von Honold : « Sekundär-Radar », 1971, Siemens AG, Seiten 101 bis 104, ist zur Anschaltung einer der beiden Antennen an den Sender ein PIN-Diodenschalter bekannt, bei welchem in jedem der beiden Schalterzweige zwei PIN-Dioden verwendet werden.

Zur Trennung von Sender und Empfängern ist hierbei eine Sende-Empfangs-Weiche vorgesehen. Die Empfänger liegen über die Weiche an den jeweils zugeordneten Antennen.

Aus der Primärradartechnik ist es bekannt, zur Entkopplung von Sender und Empfänger einen Sende-Empfangs-Schalter zu verwenden, wenn man zur Abstrahlung der Sendeimpulse und zum Empfang der Echosignale eine gemeinsame Antenne benützt. Hierbei sind zwar die Sende- und die Empfangsfrequenz im wesentlichen gleich, so daß sie nur durch einen Schalter getrennt werden können. Es wird deswegen dort die Tatsache ausgenützt, daß der Sendeimpuls und die Empfangsperiode zeitlich nacheinander liegen. Ein solcher Sende-Empfangs-Schalter läßt sich auch bei einem Sekundärradar-Abfragegerät mit ISLS und RSLS anstelle einer Sende-Empfangs-Weiche einsetzen.

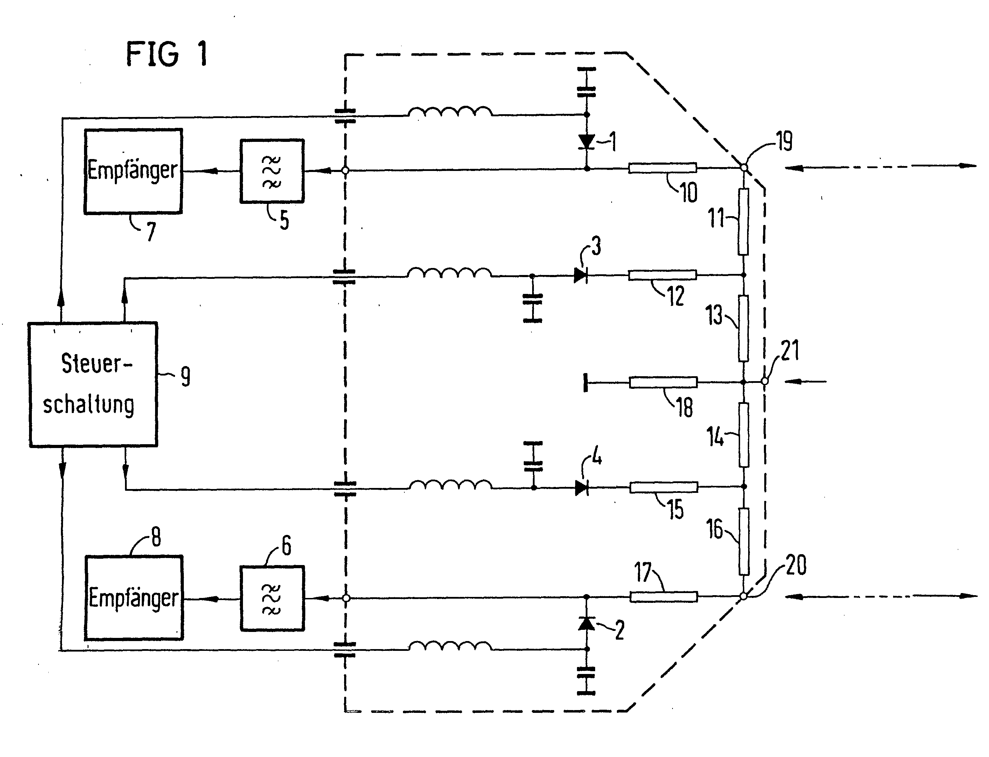

Man kann dann diesen Sende-Empfangs-Schalter mit dem PIN-Diodenschalter zur Anschaltung einer der beiden Antennen an den Sender verbinden. Eine solche Anordnung wird anhand der Fig. 1 im folgenden beschrieben.

Der in Fig. 1 dargestellte PIN-Diodenschalter stimmt weitgehend mit demjenigen auf Seite 102 des bereits erwähnten Buchs von Honold überein. Lediglich die Ansteuerung der beiden jeweils in einem Zweig liegenden PIN-Dioden 1 und 3 bzw. 2 und 4 erfolgt getrennt und an den einen Anschluß der beiden PIN-Dioden 1 und 2 ist jeweils über ein Bandfilter 5 bzw. 6 ein Empfänger 7 bzw. 8 angeschlossen. Die mittels einer Ansteuerschaltung 9 mit Treiberstufen eingestellten Diodenimpedanzen, also angenähert Leerlauf oder Kurzschluß, werden über Viertelwellenlängenleitungsstücke 10 bis 18 transformiert. Kenn-zeichnend für eine derartige Widerstandstrans-formation ist es, daß ein Kurzschluß am Eingang einer Viertelwellenlängenleitung als Leerlauf am Ausgang, erscheint.

Entsprechend wird ein Leerlauf am Eingang als Kurzschluß an den Ausgang transformiert. Durch eine derartige Transformation läßt sich der Impe-danzwert der PIN-Dioden 1 bis 4 verlagern, ohne daß die entsprechenden Bauelemente an den jeweiligen Stellen körperlich vorhanden sein müssen. Die PIN-Dioden 3 und 4 sind für die Anschaltung der an den Anschlüssen 19 und 20 angeschlossenen Antennen an den Senderanschluß 21 zuständig. Gleichzeitig sorgen die passend geschalteten PIN-Dioden 1 und 2 (Kurzschlußbetrieb) für die Abschaltung der beiden Empfänger 7 und 8 im Sendebetrieb. Bei Anschaltung der Empfänger 7 und 8 an die ihnen zugeordneten Antennenanschlüsse 19 bzw. 20 befinden sich alle PIN-Dioden 1 bis 4 im Leerlauf. Die in der Ansteuerschaltung 9 erzeugten Ansteuersignale werden durch spezielle Schaltertreiber erzeugt, was für insgesamt vier PIN-Dioden einen verhältnismäßig hohen Schaltungsaufwand erfordert. Es ist auch von Nachteil, daß die vier PIN-Dioden mit ihrer Ansteuerschaltung und ggf. die Sende-Empfangs-Weiche in den Abfragegeräten einen relativ hohen Bedarf an Raum erfordern.

Die Nachteile der bekannten PIN-Dioden-Hoch-frequenzschalter in Sekundärradar-Transpon-dern entsprechen denjenigen der bekannten Schalter in Abfragegeräten.

Der Erfindung liegt demnach die Aufgabe zugrunde, einen PIN-Dioden-Hochfrequenzschalter für Sekundärradar-Abfragegeräte mit Nebenzipfelsignalunterdrückung auf dem Abfrage- und Antwortweg bzw. für Sekundärradar-Transponder mit Antennendiversity zu schaffen, der ohne diesen großen schaltungsmäßigen Aufwand und ohne diesen relativ hohen Raumbedarf auskommt.

Gemäß der Erfindung wird die Aufgabe in beiden Fällen dadurch gelöst, daß jedes der beiden Bandfilter ausschließlich an eine Leitung angeschlossen ist, deren anderer Anschluß mit dem zugeordneten Antennenanschluß verbunden ist, und daß jeweils die Summe der elektrischen Länge des Eingangswiderstandes eines der Bandfilter und der elektrischen Länge der Leitung, die zwischen diesem Bandfilter und dem Anschluß der diesem Bandfilter zugeordneten Antenne liegt, so bemessen ist, daß sich am Antennenanschluß ein Leerlauf bei der Sendefrequenz ergibt. Bei dieser Lösung ist keine Sende-Empfangs-Weiche erforderlich und es entfallen auch zusammen mit ihren Ansteuerungen zwei PIN-Dioden, die unter anderem zur Sende-Empfangs-Umschaltung notwendig sind. Es ist außerdem ein Vorteil bei der erfindungsgemäßen Lösung, daß sich ein beliebiger Senderinnenwiderstand im Empfangsfall nicht störend auf die Empfangsfunktion auswirkt.

Wesentlich ist bei der erfindungsgemäßen Lösung, daß die beiden Bandfilter für die Sendefre-quenz eine ausreichende Sperrung gewähr-leisten. Außerdem muß aus Fertigungsgründen die elektrische Länge des Eingangswiderstands der Bandfilter bei jedem Exemplar gleich sein.

Die Ausführung des PIN-Hochfrequenzdiodenschalters nach der Erfindung erfolgt in vorteilhafter Weise in Microstrip-Technik. Dabei werden die Abblockkapazitäten der beiden noch verbleibenden PIN-Dioden in zweckmäßiger Weise jeweils in Form eines Fleckes ausgebildet. Die im Sendebetrieb auftretenden hohen Sendeleistungen können dann keine elektrischen Entladungen an dieser Stelle mehr erzeugen, da die Sprühschwelle deutlich erhöht wird.

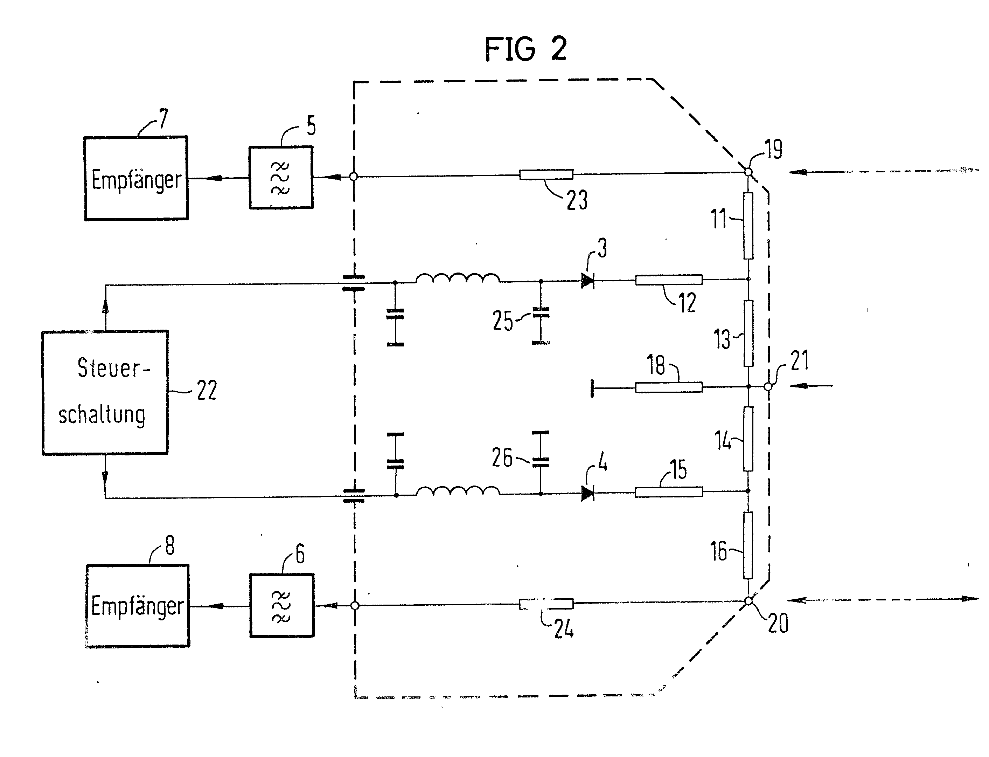

Die Erfindung wird im folgenden anhand eines in Fig. 2 dargestellten Schaltbildes für ein Sekundärradar-Abfragegerät erläutert.

Am Anschluß 21 erfolgt die Anschaltung des Senders mittels der zwei PIN-Dioden 3 und 4. Soll beispielsweise über den Antennenanschluß 19 mittels einer die Abfrageimpulse abstrahlenden Richtantenne gesendet werden, so muß die PIN-Diode 3 kurzgeschlossen und die PIN-Diode 4 im Leerlauf sein. Bei Sendebetrieb über die andere Antenne (= Rundstrahlantenne für Bezugsimpulse), d. h. über den Antennenanschluß 20, erfolgt die Ansteuerung der beiden PIN-Dioden 3 und 4 in umgekehrter Weise. Die eingestellten Dioden-Impedanzen, also angenähert Leerlauf oder Kurzschluß, werden über die beiden Viertelwellenlängenleitungsstücke 12 und 13 bzw. 15 und 14 an den Senderanschluß 21 transformiert. Vom Senderanschluß 21 zu den Antennenanschlüssen 19 bzw. 20 erfolgt keine Transformation, da die beiden Viertelwellenlängenleitungsstücke 11 und 13 bzw. 14 und 16 zueinander jeweils in Serie geschaltet sind. Im Empfangsfall sind beide PIN-Dioden 3 und 4 auf Leerlauf geschaltet. Das Empfangssignal läuft ungehindert vom Antennenanschluß 19 bzw. 20 über die Leitung 23 bzw. 24 und die Bandfilter 5 bzw. 6 zum Empfänger 7 bzw. 8 ; der Leerlauf der PIN-Diode 3 bzw. 4 ergibt am Zusam-menschaltpunkt der Leitungen 23 und 11 bzw. 24 und 16 wieder einen Leerlauf. Gleichzeitig ist gewährleistet, daß die Empfangswege gegenseitig entkoppelt sind, da der Leerlauf der PIN-Diode 3 bzw. 4 über die Leitung 12 bzw. 15 jeweils als Kurzschluß in den die Antennenanschlüsse 19 und 20 verbindenden Leitungen 11, 13, 14 und 16 erscheint. Im Sendefall ist darauf zu achten, daß die Summe der elektrischen Länge des Eingangswiderstands jedes Bandfilters 5 bzw. 6 und die elektrische Länge der Leitungen 23 bzw. 24 bis zu den Antennenanschlußpunkten 19 bzw. 20 einen Leerlauf für die Sendefrequenz ergibt. Die Bandfilter 5 und 6 müssen dabei so gewählt sein, daß für die Sendefrequenz eine ausreichende Sperrung gewährleistet ist. Außerdem muß die elektrische Länge des Eingangswiderstandes jedes Bandfilters 5 bzw. 6 bei jedem Exemplar aus Gründen der Fertigung gleich sein. Für die Trennung der Empfänger 7 und 8 von den Sendeimpulsen sind keine eigenen PIN-Dioden-Schalter mehr erforderlich, da durch die elektrische Länge des Eingangswiderstands der Bandfilter 5 bzw. 6 und die dazu passende Länge der Leitungen 23 bzw. 24 für einen Leerlauf der Sendefrequenz im jeweiligen Antennenanschlußpunkt 19 bzw. 20 sowieso gesorgt ist. Diese Sendeleistung kann aufgrund der Reflexion an den beiden Bandfiltern 5 und 6 nicht in die Empfänger 7 bzw. 8 gelangen. Die Reflexion ist also dabei so geartet, daß an den Antennenanschlußpunkten 19 und 20 ein Leerlauf beim Betrieb mit der Sendefrequenz besteht.

Als Querglied zu den zwei Leitungen von der Ansteuerschaltung 22 zu den beiden PIN-Dioden 3 und 4 liegt jeweils eine Abblockkapazität 25 bzw. 26. Wird der PIN-Diodenschalter nach der Erfindung in Microstrip-Technik ausgeführt, was als besonders vorteilhaft anzusehen ist, so werden diese beiden Kapazitäten 25 und 26 in zweckmäßiger Weise jeweils als Fleck ausgebildet. Durch diese Maßnahme wird die Sprühschwelle deutlich erhöht, was wegen der hohen auftretenden Sendeleistungen als besonders vorteilhaft anzusehen ist.

Bei Verwendung einer Monopulsantenne anstelle einer Richtantenne und einer Rundstrahlantenne erfolgt der Summensignalanschluß z. B. am Antennenanschluß 19 und der Differenzsignalanschluß am Antennenanschluß 20. Die Abfrageimpulse des Senders werden dann über das Summendiagramm dieser Antenne und die Bezugspegelimpulse über das Differenzdiagramm ausgesandt. Über die entsprechenden Antennenanschlüsse 19 und 20 für die Summe und die Differenz werden die empfangenen Signale auch den beiden Empfängern 7 und 8 zugeführt, in welchem dann zur Signalauswertung ein Pegelvergleich zwischen den mit den beiden Empfängern 7 und 8 aufgenommenen Signalen erfolgt.

Ansprüche

1. In einem mit einer Einrichtung zur Nebenzipfelsignalunterdrückung auf dem Abfrage- und Antwortweg (ISLS und RSLS) versehenen Sekundärradar-Abfragegerät vorgesehener PIN-Dioden-Hochfrequenzschalter zur Aufteilung der von einem Sender kommenden Abfrageimpulse an eine erste Antenne und der vom gleichen Sender ausgehenden Bezugspegelimpulse an eine zweite Antenne mittels zweier von einer Ansteuerschaltung (22) entweder im Sperr- oder Kurzschlußbereich betriebener PIN-Dioden (3, 4), deren einer Anschluß jeweils über ein aus drei Viertelwellenlängenleitungsstücken (11-13, 14-16) bestehendes T-Glied zum einen mit dem Senderanschluß (21) und zum anderen mit dem Anschluß (19) für die eine Antenne bzw. mit dem Anschluß (20) für die andere Antenne verbunden ist, sowie zur Weiterleitung der an den beiden Antennenanschlüssen vorliegenden Empfangssignale an zwei Empfänger (7, 8), von denen jeder jeweils einer der Antennen zugeordnet ist und an seiner Eingangsseite ein die Sendesignale sperrendes, aber die Empfangssignale durchlassendes Bandfilter (5, 6) aufweist, dadurch gekennzeichnet, daß jedes der beiden Bandfilter (5, 6) ausschließlich an eine Leitung (23, 24) angeschlossen ist, deren anderer Anschluß mit dem zugeordneten Antennenanschluß (19, 20) verbunden ist, und daß jeweils die Summe der elektrischen Länge des Eingangswiderstandes eines der Bandfilter (5, 6) und der elektrischen Länge der Leitung (23, 24), die zwischen diesem Bandfilter und dem Anschluß der diesem Bandfilter zugeordneten Antenne liegt, so bemessen ist, daß sich am entsprechenden Antennenanschluß ein Leerlauf bei der Sendefrequenz ergibt.

2. In einem mit einer mit zwei Antennen ausgestatteten Antennendiversity-Einrichtung versehenen Sekundärradar-Transponder vorgesehener PIN-Dioden-Hochfrequenzschalter zur Beaufschlagung einer der beiden Antennen mit Antwortimpulsen mittels zweier von einer Ansteuerschaltung (22) entweder im Sperr- oder Kurzschlußbereich betriebener PIN-Dioden (3, 4), deren einer Anschluß jeweils über ein aus drei Viertelwellenlängenleitungsstücken (11-13, 14-16) bestehendes T-Glied zum einen mit dem Senderanschluß (21) und zum anderen mit dem Anschluß (19) für die eine Antenne bzw. mit dem Anschluß (20) für die andere Antenne verbunden ist, sowie zur Weiterleitung der an den beiden Antennenanschlüssen vorliegenden Empfangssignale an zwei Empfänger (7, 8), von denen jeder jeweils einer der Antennen zugeordnet ist und an seiner Eingangsseite ein die Sendesignale sperrendes, aber die Empfangssignale durchlassendes Bandfilter (5, 6) aufweist, dadurch gekennzeichnet, daß jedes der beiden Bandfilter (5, 6) ausschließlich an eine Leitung (23, 24) angeschlossen ist, deren anderer Anschluß mit dem zugeordneten Antennenanschluß (19, 20) verbunden ist, und daß jeweils die Summe der elektrischen Länge des Eingangswiderstandes eines der Bandfilter (5, 6) und der elektrischen Länge der Leitung (23, 24), die zwischen diesem Bandfilter und dem Anschluß der diesem Bandfilter zugeordneten Antenne liegt, so bemessen ist, daß sich am entsprechenden Antennenanschluß ein Leerlauf bei der Sendefrequenz ergibt.

3. PIN-Dioden-Hochfrequenzschalter nach Anspruch 1 oder 2, dadurch gekennzeichnet, daß er mit den Leitungen (23 und 24) zusammengebaut ist.

4. PIN-Dioden-Hochfrequenzschalter nach einem der vorhergehenden Ansprüche, gekennzeichnet durch eine Ausführung in Mikrostreifenleitungs- (« Microstrip »-) Technik.

5. PIN-Dioden-Hochfrequenzschalter nach Anspruch 4, dadurch gekennzeichnet, daß die Abblockkapazität (25, 26) jeder der PIN-Dioden (3, 4) in der Form eines Flecks ausgebildet ist.

## Claims

1. PIN diode RF switch, which is provided in a secondary radar interrogator apparatus having means for side lobe signal suppression on the interrogation path and on the response path (ISLS and RSLS), to distribute the interrogation pulses from a transmitter to a first aerial and to distribute the reference level pulses emitted by the same transmitter to a second aerial by means of two PIN diodes (3, 4) which are driven by a control circuit (22) either in the cutoff region or in the short-circuit region, one terminal of each of said diodes being connected on the one hand via a T-element, comprising three quarter-wave guide members (11-13, 14-16) to the transmitter terminal (21) and on the other hand to the terminal (19) of one aerial or to the terminal (20) of the other aerial, and to transfer the reception signals, which are present at the two aerial terminals, to two receivers (7, 8), each of which is associated with one of the aerials and is provided on its input side with a bandpass filter (5, 6) which blocks the transmission signals but allows the reception signals to pass, characterised in that each of the two bandpass filters (5, 6) is exclusively connected to one guide member (23, 24), the second terminal of which is connected to the associated aerial terminal (19, 20) and the sum of the electrical length of the input impedance of one of the bandpass filters (5, 6) and of the electrical length of the guide member (23, 24), situated between said bandpass filter and the terminal of the aerial associated with the bandpass filter, is so dimensioned as to produce an open-circuit condition at the transmission frequency.

2. PIN diode RF switch, which is provided in a secondary radar transponder, having aerial diversity means with two aerials, to apply response pulses to one of the two aerials by means of two PIN diodes (3, 4) which are operated by a control circuit (22) either in the cutoff region or in the short-circuit region, one terminal of each of the said diodes being connected, on the one hand via a T-element, comprising three quarter-wave guide members (11-13, 14-16), to the transmitter terminal (21) and on the other hand to the terminal (19) of one aerial or to the terminal (20) of the other aerial, and to transfer the reception signals, which are present at the two aerial terminals, to two receivers (7, 8), each of which is associated with one of the aerials and is provided on the input side with a bandpass filter (5, 6) which blocks the transmission signals but allows the reception signals to pass, characterised in that each of the two bandpass filters (5, 6) is exclusively connected to one guide member (23, 24), the second terminal of which is connected to the associated aerial terminal (19, 20) and the sum of the electrical length of the input impedance of one of the bandpass filters (5, 6) and of the electrical length of the guide member (23, 24), situated between said bandpass filter and the terminal of the aerial associated with the bandpass filter, is so dimensioned as to produce an open-circuit condition at the transmission frequency.

3. PIN diode RF switch, according to claim 1 or 2, characterised in that it is integrally constructed with the guide members (23 and 24).

4. PIN diode RF switch, according to any of the preceding claims, characterised by an embodiment in « Microstrip » technology.

5. PIN diode RF switch, according to claim 4, characterised in that the blocking capacitance (25, 26) of each of the PIN diodes (3, 4) is embodied as a spot.

## Revendications

1. Commutateur haute fréquence à diodes p-i-n prévu dans un appareil d'interrogation à radar secondaire muni d'un dispositif pour la suppression des signaux des lobes secondaires sur le trajet d'interrogation et de réponse (ISLS et RSLS), pour répartir les impulsions d'interrogation arrivant d'un émetteur au niveau d'une première antenne et les impulsions de niveau de référence partant du même émetteur au niveau d'une seconde antenne, au moyen de deux diodes p-i-n (3, 4), mises soit dans la plage de blocage soit dans la plage de court-circuit par un circuit de commande (22), dont une borne est reliée respectivement par l'intermédiaire d'un élément en T, constitué par trois sections de ligne en quart d'onde (11-13, 14-16), d'une part à la borne (21) d'émetteur et d'autre part à la borne (19) pour la première antenne ou à la borne (20) pour l'autre antenne, ainsi que pour transmettre les signaux de réception existant sur les deux bornes d'antenne à deux récepteurs (7, 8) dont chacun est respectivement associé à une des antennes et comporte, de son côté d'entrée, un filtre passe-bande (5, 6) bloquant les signaux d'émission mais laissant passer les signaux de réception, caractérisé par le fait que chacun des deux filtres passe-bande (5, 6) est relié exclusivement à une ligne (23, 24) dont l'autre borne est reliée à la borne d'antenne associée (19, 20), et que la somme de la longueur électrique de la résistance d'entrée d'un des filtres passe-bande (5, 6) et de la longueur électrique de la ligne (23, 24) qui se trouve entre ce filtre passe-bande et la borne de l'antenne associée à ce filtre passe-bande est respectivement dimensionnée de manière à obtenir un circuit ouvert à la fréquence d'émission au niveau de la borne d'antenne correspondante.

2. Commutateur haute fréquence à diodes p-i-n prévu dans un transpondeur à radar secondaire muni d'un dispositif à diversité d'antennes équipé de deux antennes, pour appliquer des impulsions de réponse à une des deux antennes au moyen de deux diodes p-i-n (3, 4), mises soit dans la plage de blocage soit dans la plage de court-circuit par un circuit de commande (22), dont une borne est reliée respectivement par l'intermédiaire d'un élément en T, constitué par trois sections de ligne en quart d'onde (11-13, 14-16), d'une part à la borne (21) d'émetteur et d'autre part à la borne (19) pour la première antenne ou à la borne (20) pour l'autre antenne, ainsi que pour transmettre les signaux de réception existant sur les deux bornes d'antenne à deux récepteurs (7, 8) dont chacun est respectivement associé à une des antennes et comporte, de son côté d'entrée, un filtre passe-bande (5, 6) bloquant les signaux d'émission mais laissant passer les signaux de réception, caractérisé par le fait que chacun des deux filtres passe-bande (5, 6) est relié exclusivement à une ligne (23, 24) dont l'autre borne est reliée à la borne d'antenne associée (19, 20), et que la somme de la longueur électrique de la résistance d'entrée d'un des filtres passe-bande (5, 6) et de la longueur électrique de la ligne (23, 24) qui se trouve entre ce filtre passe-bande et la borne de l'antenne associée à ce filtre passe-bande est respectivement dimensionnée de manière à obtenir un circuit ouvert à la fréquence d'émission au niveau de la borne d'antenne correspondante.

3. Commutateur haute fréquence à diodes p-i-n suivant la revendication 1 ou 2, caractérisé par le fait qu'il est réalisé avec les lignes (23 et 24).

4. Commutateur haute fréquence à diodes p-i-n suivant l'une des revendications précédentes, caractérisé par une réalisation suivant la technique des microbandes (« microstrip »).

5. Commutateur haute fréquence à diodes p-i-n suivant la revendication 4, caractérisé par le fait que la capacité de blocage (25, 26) de chacune des diodes p-i-n (3, 4) est réalisée sous la forme d'un point.

FIG 1

FIG 2

0 012918